# EUROPEAN PATENT SPECIFICATION

(11) **EP 3 290 379 B1**
(45) Date of publication and mention of the grant of the patent: **25.03.2020**
(21) Application number: 17188129.5
(22) Date of filing: 28.08.2017
(51) Int. Cl.: F16H 55/38, B66B 15/04, F16H 55/50, B23P 9/02

(54) **BELT SHEAVE AND METHOD OF IMPRINTING**
RIEMENSCHEIBE UND VERFAHREN ZUM BEDRUCKEN
POULIE À COURROIE ET PROCÉDÉ D'IMPRESSION

(30) Priority: 30.08.2016 US 201615251151
(43) Date of publication of application: 07.03.2018
(73) Proprietor: Otis Elevator Company, Farmington, Connecticut 06032 (US)
(72) Inventor: Martin, Kyle B., Farmington, CT Connecticut 06032 (US); Lanesey, David J., Farmington, CT Connecticut 06032 (US)
(74) Representative: Schmitt-Nilson Schraud Waibel Wohlfrom Patentanwälte Partnerschaft mbB

(56) References cited:
- DE-U1-202011 101 706
- US-A1- 2008 105 496

## Description

### BELT SHEAVE AND METHOD OF IMPRINTING

The present disclosure relates to belt sheaves, and more particularly, to a method of conditioning belt sheave surfaces.

Rotating sheaves are known to guide and assist the movement of belts that ride upon outer, generally cylindrical, surfaces of the sheave. In some sheave applications, slippage between the sheave and the belt may be of little or no concern. In other applications, slippage between the belt and sheave may cause unwanted consequences pertaining to other weight bearing components that may be coupled to the moving belt. In some applications, the belts may be cogged and mate with a cogged surface of the sheave, in other applications a friction increasing surface may be added to the sheave surface. One such friction inducing technique may be achieved via sand blasting the surface. Unfortunately, some belt sheave applications may not be conducive toward cogged belts, while other applications may have a tendency to wear friction producing surfaces smooth over time, thus encouraging slippage. Yet further, replacement of worn-smooth sheaves in the field may be expensive, time consuming, and may require removal of the belt and removal of various components associated with the sheave. One non-limiting example of such a sheave is the machine driven sheave of an elevator system.

US 2008/0105496 A1 discloses a belt device for driving an elevator, the rest retaining capability of which is improved in order to retain the stopped state of an elevator cage if oil or water adheres to between a belt and a pulley.

DE 20 2011 101 706 U1 discloses a tool holder for knurling or embossing rollers, which, using a central clamping element that acts on the roller carrier, can hold one or more rotatably mounted knurling or embossing rollers on the roller carriers.

Embodiments of the invention may solve one or more of the problems of the art, with the solutions set forth in the independent claims and refinements as recited in the dependent claims.

A combination of a sheave and a sheave knurling tool according to one, non-limiting, embodiment of the present disclosure is provided in claim 4.

Additionally to the foregoing embodiment, each one of the plurality of imprints are circumferentially spaced from an adjacent imprint of the plurality of imprints.

In an embodiment, the surface is substantially cylindrical.

In an embodiment, the surface includes a substantially smooth cylindrical portion and an imprinted portion that is circumferentially continuous.

In an embodiment, each imprint of the plurality of imprints include a member disposed radially outward from the substantially smooth cylindrical portion.

In an embodiment, each imprint of the plurality of imprints include a valley defined by the imprinted portion and disposed radially inward from the substantially smooth cylindrical portion.

In an embodiment, the plurality of imprints is a plurality of knurls.

In an embodiment, the sheave is a driven elevator sheave.

An elevator system according to another, non-limiting, embodiment is provided in claim 10.

Additionally to the foregoing embodiment, the first sheave is a driven sheave coupled to the drive unit.

In an embodiment, the first sheave is a car sheave rotatably mounted to the car.

In an embodiment, the elevator system includes a structure defining a hoistway containing the car; and a counterweight suspended by the belt.

In an embodiment, the belt includes a first segment projecting from the first sheave to the car, and a second segment projecting from the first sheave to the counterweight.

In an embodiment, the elevator system includes a first termination engaged to the structure; and a second sheave mounted for rotation to the car, wherein the first segment is routed about the second sheave and extends between the first sheave and the first termination.

In an embodiment, the elevator system includes a second termination engaged to the structure; and a third sheave mounted for rotation to the counterweight, wherein the second segment is routed about the third sheave and extends between the first sheave and the second termination.

In an embodiment, the plurality of imprints are constructed and arranged to produce friction between the belt and the substantially cylindrical surface.

A method of imprinting a belt sheave without removal of an associated belt according to another, non-limiting, embodiment is provided in claim 1.

Additionally to the foregoing embodiment, the method includes biasing the knurling wheel against the sheave.

In an embodiment, the knurling wheel is biased against the sheave via a jack screw of the tool.

In an embodiment, the method includes actuating a jack screw of the tool to bias the knurling wheel against the sheave.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

Various features will become apparent to those skilled in the art from the following detailed description of the disclosed non-limiting embodiments. The drawings that accompany the detailed description can be briefly described as follows:
FIG. 1 is a schematic of an elevator system as one, non-limiting, application of a sheave presented as an exemplary embodiment of the present disclosure;
FIG. 2 is a side view of the sheave;
FIG. 3 is a partial cross section of the sheave illustrating imprints;
FIG. 4 is an end view of the sheave installed in the field and with a sheave knurling tool positioned upon the sheave;
Fig. 5 is an enlarged view of the sheave knurling tool;
FIG. 6 is a flow chart of a method of imprinting the sheave; and
FIG. 7 is an end view of a second embodiment of a sheave knurling tool position upon the sheave.

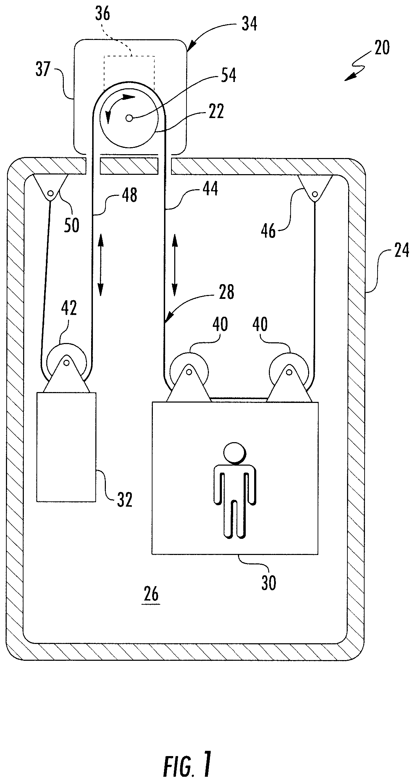

Referring to FIG. 1, an elevator system 20 is illustrated as one, non-limiting, application of a sheave 22 of the present disclosure that may be a drive sheave. The elevator system 20 may include a stationary structure or building 24 defining a hoistway 26, a belt 28, a car 30, a counterweight 32 and a drive unit 34. The car 30 may carry passengers or other objects and may be constructed to move substantially vertically in the hoistway 26. The drive unit 34 may be housed in the hoistway 26 itself, or in a machine room (not shown) of the building 24 located generally above the hoistway 26, and may include an electric motor 36 that drives and is coupled for rotation to the sheave 22, and a motor support structure or motor housing 37 fixed to the stationary structure 24. In one example, the belt 28 is partially wrapped (e.g., substantially less than 360 degrees) about the sheave 22 and extends between the car 30 and the counterweight 32 such that the car and counterweight 32 may be suspended by the belt 28. In operation and when the drive unit 34 receives a command signal to raise the car 30, the sheave 22 rotates in a first direction that lowers the counterweight 32 as the car 30 rises, and vice-versa. The counterweight 32 may generally weigh about the same as the car 30 when at about fifty percent capacity, and thus reduces the work output requirements of the drive unit 34.

The elevator system 20 may further include at least one car sheave or pulley 40 (i.e., two illustrated) rotationally mounted to the elevator car 22, and a counterweight sheave or pulley 42 rotationally mounted to the counterweight 24. From the drive sheave 22 of the drive system 26, a car segment 44 of the belt 28 may generally extend in a downward direction, wrap about the car sheave(s) 40, and extend back upward to a structure termination 46. Similarly, and from an opposite side of the drive sheave 22, a counterweight segment 48 of the belt 28 may generally extend in a downward direction, wrap about the counterweight sheave 42, and extend back upward to a structure termination 50. Both structure terminations 46, 50 may be load bearing and may be secured to and supported by the stationary structure 24. Furthermore, the structure terminations 46, 50 may be dead end hitches as is generally known in the art.

The belt 28 may be any variety of flexible and elongated members and may include a series of small elevator straps coated with any variety of materials (e.g., polyurethane), and referred to as coated steel belts (CSB). It is contemplated and understood that the car belt segment 44 and the counterweight belt segment 48 may generally be separated at the drive sheave 22 with the car belt segment 44 wrapping about the drive sheave 22 in a first rotational direction, and the counterweight belt segment 48 wrapping about the drive sheave 38 in an opposite rotational direction. It is further understood that the belt segments 44, 48 may be other than car and counterweight segments and is dependent upon any number of non-limiting examples of sheave arrangements. For example, an elevator system may not have a counterweight, yet may still have two belt segments on either side of a motor driven sheave (e.g., 1:1 elevator roping scenario). It is also contemplated and understood that the elevator straps may be load bearing steel members, may be load bearing non-metallic members, and/or may be coated fiber belts (CFB).

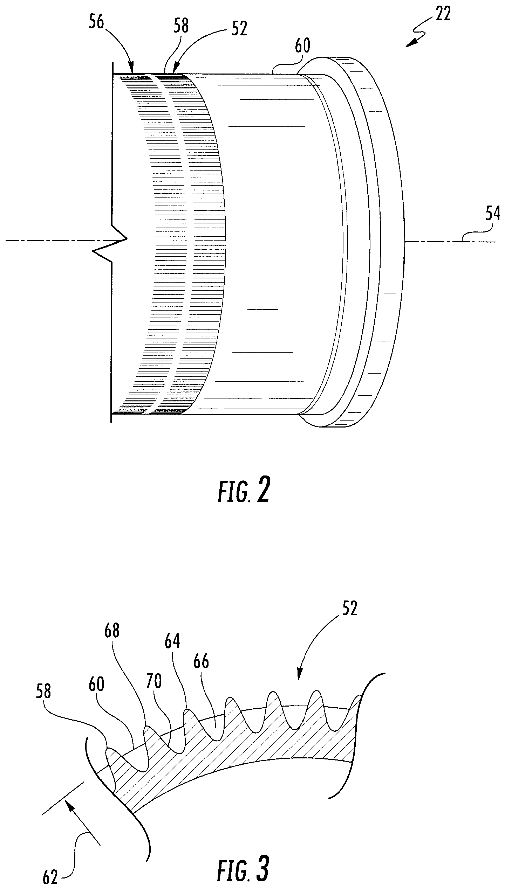

Referring to FIGS. 1 through 3, any one or more of the sheaves 22, 40, 42 may be metallic (e.g., chrome plated steel), and may include a plurality of imprints 52 that may be knurls to induce friction between the belt 28 and the imprinted sheave. In the present example, the drive sheave 22 may rotate about an axis 54, and may include a surface 56 that may be circumferentially continuous and substantially cylindrical, faces at least in-part radially outward, and is centered about axis 54. The entire surface 56 may be imprinted (i.e., is completely covered with the plurality of imprints 52), or may include a circumferentially continuous first portion 58 that carries the plurality of imprints 52, and an axially adjacent, cylindrical, and substantially smooth second portion 60 having a consistent diameter (see arrow 62 in FIG. 3). It is understood that the term 'substantially smooth' includes describing a surface that is polished smooth, and/or a surface that is, or resembles, a sand blasted surface, but may not include a knurled surface. It is contemplated and understood that the substantially cylindrical surface 56 may include a slight spherical crown as is known by one skilled in the art of belt sheaves.

Referring to FIGS. 2 and 3, each one of the plurality of imprints 52 may include a member 64 that may be disposed radially outward from the second portion 60 of the surface 56. Each member 64 may be spaced from the next adjacent member by a valley or cavity 66 having boundaries defined by the surface portion 58, and disposed radially inward from the second portion 60. In the illustrated example, the members 64 may be axially extending ribs spaced circumferentially from the next adjacent rib by a valley 66. More specifically, each rib 64 may carry a convex face 68 that generally extends circumferentially and congruently joins into a concave face 70 that generally defines the boundaries of the valleys 66. It is contemplated and understood that the imprints 52 and/or members 64 may be any variety of configurations capable of producing friction and limiting or preventing belt slip between the belt 28 and sheave 22. In alternative examples, the members 64 may be diamond-shaped, a helix of straight ridges, dots, or members that form a criss-cross pattern.

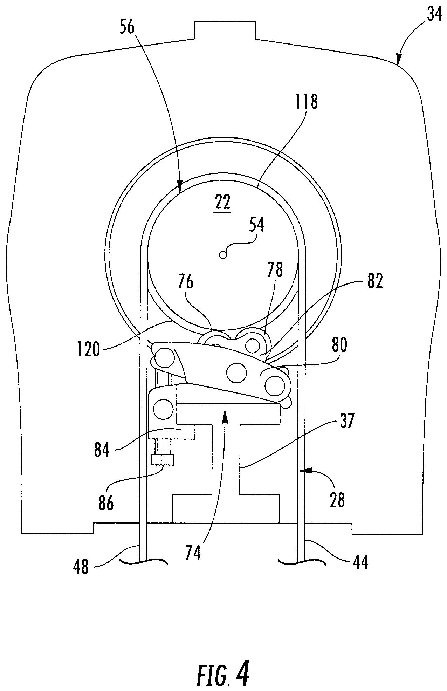

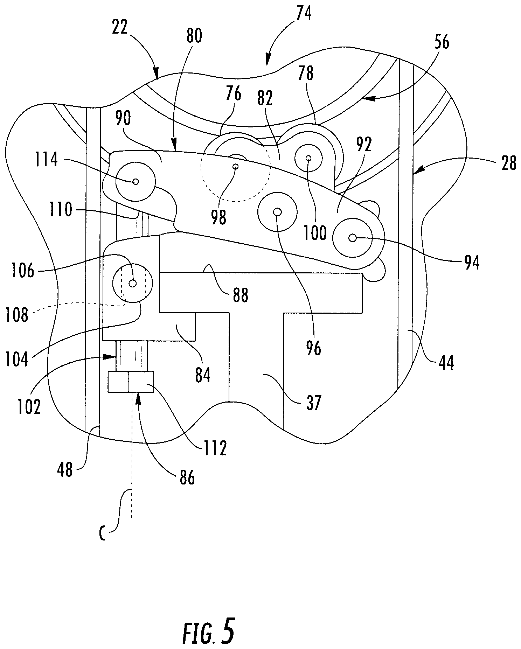

Referring to FIG. 4, a sheave knurling tool 74 may be applied as part of a method to, for example, recondition a drive sheave 22 in the field without having to perform the time consuming and costly task of removing the belt 28. The sheave knurling tool 74 may include a plurality of knurling wheels (i.e., two illustrated as 76, 78), an arm 80, a carrier 82, a body 84 and a jack 86. The body 84 is adapted to fixedly and detachably mount to the support structure 37 of the drive unit 34 generally between the two segments 44, 48 of the belt 28 that may drape down from the drive sheave 22. In the present example, the body 84 may rest upon a shelf 88 (see FIG. 5) of the support structure 37. It is further contemplated and understood that the body 84 may be fixed to the support structure 37 in any variety of ways and may be dependent upon the physical orientation of the support structure for a particular application. In another example, the body 84 maybe bolted to the support structure by utilizing pre-existing bolts of the structure.

Referring to FIGS. 4 and 5, the arm 80 may include opposite end portions 90, 92, with the first end portion 90 being in operative contact with the jack 86, and the second end portion 92 being pivotally engaged to the body 84 about a pivot axis 94. The carrier 82 may be pivotally engaged to the arm 80 about a pivot axis 96 that may be disposed between the end portions 90, 92 of the arm. The knurling wheels 76, 78 may be rotationally engaged to the carrier 82 about respective rotational axis 98, 100 spaced radially apart from one another.

The jack 86 may include a screw 102 that extends along a centerline C, and a rod or pin 104 rotationally mounted to the body 84 about axis 106. A threaded bore 108 may communicate transversely through the pin 104 for adjustable and threaded engagement of the screw 102. The screw 102 may include including opposite first and second end segments 110, 112, with the first end segment 110 being in operative contact (i.e., bearing against) the first end portion 90 of the arm, and the second end segment 112 being an enlarged head such as, for example, a bolt head to facilitate rotational adjustment of the screw 102. The operative contact of the first end segment 110 may generally be a pivotal engagement about a pivot axis 114. The centerline C may be about normal to and extends through the axis 106. The axes 94, 96, 98, 100, 106, 114 may all be substantially parallel to one-another.

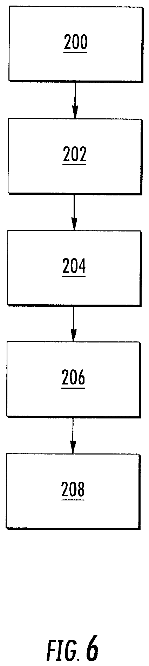

Referring to FIGS. 5 and 6, a method of imprinting a sheave 22 and/or operating the sheave knurling tool 74 is generally illustrated as one, non-limiting, example. The method may be applied as a repair process and/or reconditioning method that utilizes a knurling process to press the plurality of imprints 52 into the surface 56 (i.e., plastically deform the surface) after a sheave is worn smooth. During the knurling process, the drive sheave 22 may remain coupled to the drive unit 34 (i.e., in the field) and the belt 28 may remain in contact with a circumferentially extending section 118 (see FIG. 4) of the cylindrical surface 56. The meaning of the terminology 'imprinting knurls or imprints' means the deformation (i.e., plastic deformation) where surface material of the sheave is not removed but is deformed. Therefore, an imprinted or knurled surface would not include a sand blasted surface, a surface that is machined through, for example, grinding, and a molded surface.

At block 200 of FIG. 6, the sheave knurling tool 74 may be placed between the two belt segments 44, 48 and generally beneath the drive sheave 22. At block 202, the body 84 of the sheave knurling tool 74 may be mounted to the support structure 37 of the drive unit 34. At block 204, the jack 86 may be actuated thereby pivotally moving the arm 80 with respect to the body 84 and about axis 94. With the pivoting motion of the arm, the screw 102 may pivot with respect to the arm 80 about axis 114, and pivot with respect to the body 84 about axis 106. At block 206 and with continued actuation of the jack 86, the knurling wheels 76, 78 may be biased against a circumferentially extending, exposed, section 120 of the cylindrical surface 56 (i.e., that section of the surface not in contact with the belt 28). The pivoting action of the carrier 82 with respect to the arm 80 and about axis 96 assists in establishing an even distribution of a bearing/bias force between the wheels 76, 78. The magnitude of this biasing force is sufficient to cause plastic deformation of the surface 56. At block 208 the drive sheave 22 is rotated about axis 54 thereby rotating the knurling wheels 76, 78 which produces the plurality of imprints 52 (see FIG. 3). The drive sheave 22 may be rotated via the drive unit 34 that remains coupled to the sheave, or by other means.

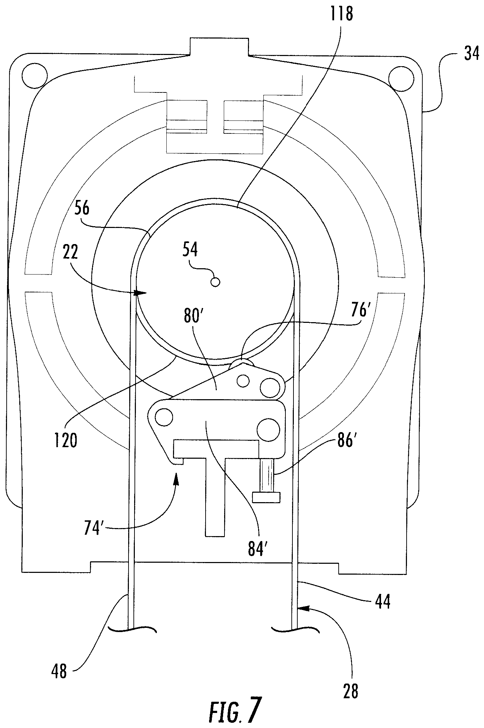

Referring to FIG. 7, a second embodiment of a sheave knurling tool is illustrated wherein like elements to the first embodiment have like identifying numerals except with the addition of a prime symbol suffix. A sheave knurling tool 74' may include a single knurling wheel 76' mounted for rotation directly to an arm 80'. In this example, the carrier 82 of the first embodiment may not be utilized.

Advantages and benefits of the present disclosure include a sheave with reduced belt slip, and a tool providing the ability to perform maintenance on, and/or reconditioning of, a sheave without having to remove the sheave from the field. Other advantages include a solution to driven sheaves of an elevator system that may have surfaces undesirably polished by prior belt slip occurrences, a reduction in maintenance costs, and a reduction in system downtime.

The present disclosure is not limited to the particular examples disclosed herein, but includes all embodiments falling within the scope of the appended claims.

## Claims

1. A method of imprinting a belt sheave (22) without removal of an associated belt (28), the method comprising:
placing a knurling wheel of a tool (74) against a circumferentially extending section of a sheave (22) not in contact with the belt (28); and
rotating the sheave (22).

2. The method set forth in claim 1, further comprising:
biasing the knurling wheel against the sheave (22);
wherein particularly the knurling wheel is biased against the sheave (22) via a jack screw of the tool (74).

3. The method set forth in claim 2, further comprising:
actuating a jack screw of the tool (74) to bias the knurling wheel against the sheave (22).

4. A combination of a sheave (22) constructed and arranged to rotate about an axis for guiding motion of a belt (28) and a sheave knurling tool (74) configured to imprint the sheave (22) without removal of the belt (28), the sheave (22) comprising:
a circumferentially continuous surface (56) facing substantially radially outward, and including a plurality of imprints (52) orientated to prevent belt (28) slip upon the sheave (22),
**characterized in that** the knurling tool (74) comprises a knurling wheel configured to be placed against a circumferentially extending section of the sheave (22) not in contact with the belt (28) to produce imprints (52) by rotating the sheave (22).

5. The combination set forth in claim 4, wherein each one of the plurality of imprints (52) are circumferentially spaced from an adjacent imprint of the plurality of imprints (52).

6. The combination set forth in claim 4 or 5, wherein the circumferentially continuous surface (56) is substantially cylindrical.

7. The combination set forth in any of claims 4 to 6, wherein the circumferentially continuous surface (56) includes a substantially smooth cylindrical portion (60) and an imprinted portion (52, 56) that is circumferentially continuous,
wherein particularly each imprint (52) of the plurality of imprints (52) include a member disposed radially outward from the substantially smooth cylindrical portion (60);
wherein particularly each imprint (52) of the plurality of imprints (52) include a valley defined by the imprinted portion and disposed radially inward from the substantially smooth cylindrical portion (60).

8. The combination set forth in any of claims 4 to 7, wherein the plurality of imprints (52) is a plurality of knurls.

9. The combination set forth in any of claims 4 to 8, wherein the sheave (22) is a driven elevator sheave (22).

10. An elevator system (20), comprising:
a drive unit (34);
a car (30);
a belt (28) coupled between the drive unit (34) and the car (30); and
a combination of a first sheave (22) and knurling tool (74) according to any of claims 4 to 9, said sheave (22) including a substantially cylindrical surface (56) in rotational contact with the belt (28), the substantially cylindrical surface (56) including a plurality of imprints (52) distributed circumferentially to prevent belt (28) slip upon the first sheave (22).

11. The elevator system (20) set forth in claim 10, wherein the first sheave (22) is a driven sheave (22) coupled to the drive unit (34);
and/or
wherein the first sheave (22) is a car sheave (22) rotatably mounted to the car (30).

12. The elevator system (20) set forth in claim 11, further comprising:
a structure defining a hoistway (26) containing the car (30); and
a counterweight (32) suspended by the belt (28);
wherein particularly the belt (28) includes a first segment (44) projecting from the first sheave (22) to the car (30), and a second segment (48) projecting from the first sheave (22) to the counterweight (32).

13. The elevator system (20) set forth in claim 12, further comprising:
a first termination (46) engaged to the structure; and
a second sheave (40) mounted for rotation to the car (30), wherein the first segment (44) is routed about the second sheave (40) and extends between the first sheave (22) and the first termination (46).

14. The elevator system (20) set forth in claim 13, further comprising:
a second termination (50) engaged to the structure; and
a third sheave (42) mounted for rotation to the counterweight (32), wherein the second segment (48) is routed about the third sheave (42) and extends between the first sheave (22) and the second termination (50).

15. The elevator system (20) set forth in any of claims 10 to 14, wherein the plurality of imprints (52) are constructed and arranged to produce friction between the belt (28) and the substantially cylindrical surface (56).

## Patentansprüche

1. Verfahren zum Prägen einer Riemenscheibe (22) ohne das Entfernen eines zugehörigen Riemens (28), wobei das Verfahren Folgendes umfasst:
Anordnen eines Rändelrades eines Werkzeugs (74) gegen einen sich in Umfangsrichtung erstreckenden Bereich einer Scheibe (22), die nicht in Kontakt mit dem Riemen (28) steht; und
Drehen der Scheibe (22).

2. Verfahren nach Anspruch 1, ferner umfassend:
Vorspannen des Rändelrades gegen die Scheibe (22); wobei insbesondere das Rändelrad mittels einer Abdrückschraube des Werkzeugs (74) gegen die Scheibe (22) vorgespannt ist.

3. Verfahren nach Anspruch 2, ferner umfassend:
Betätigen einer Abdrückschraube des Werkzeugs (74), um das Rändelrad gegen die Scheibe (22) vorzuspannen.

4. Kombination aus einer Scheibe (22), die so konstruiert und angeordnet ist, dass sie sich zum Führen einer Bewegung eines Riemens (28) um eine Achse dreht, und eines Scheibenrändelwerkzeuges (74), das dazu konfiguriert ist, die Scheibe (22) zu prägen, ohne den Riemen (28) zu entfernen, wobei die Scheibe (22) Folgendes umfasst:
eine in Umfangsrichtung durchgehende Fläche (56), die im Wesentlichen radial nach außen gerichtet ist und eine Vielzahl an Prägungen (52) beinhaltet, die dazu ausgerichtet sind, das Rutschen des Riemens (28) auf der Scheibe (22) zu verhindern,
**dadurch gekennzeichnet, dass** das Rändelwerkzeug (74) ein Rändelrad umfasst, das dazu konfiguriert ist, gegen einen sich in Umfangsrichtung erstreckenden Bereich einer Scheibe (22) platziert zu werden, die nicht in Kontakt mit dem Riemen (28) stehen, um durch das Drehen der Scheibe (22) Prägungen (52) zu erzeugen.

5. Kombination nach Anspruch 4, wobei jede der Vielzahl an Prägungen (52) in Umfangsrichtung von einer benachbarten Prägung der Vielzahl an Prägungen (52) beabstandet ist.

6. Kombination nach einem der Ansprüche 4 oder 5, wobei die in Umfangsrichtung durchgehende Fläche (56) im Wesentlichen zylindrisch ist.

7. Kombination nach einem der Ansprüche 4 bis 6, wobei die in Umfangsrichtung durchgehende Fläche (56) einen im Wesentlichen glatten zylindrischen Abschnitt (60) und einen geprägten Abschnitt (52, 56), der in Umfangsrichtung durchgehend ist, beinhaltet;
wobei insbesondere jede Prägung (52) der Vielzahl an Prägungen (52) ein Element beinhaltet, das radial außerhalb des im Wesentlichen glatten zylindrischen Abschnitts (60) angeordnet ist;
wobei insbesondere jede Prägung (52) der Vielzahl an Prägungen (52) ein Tal beinhaltet, das durch den geprägten Abschnitt definiert und radial innerhalb des im Wesentlichen glatten zylindrischen Abschnitts (60) angeordnet ist.

8. Kombination nach einem der Ansprüche 4 bis 7, wobei die Vielzahl an Prägungen (52) eine Vielzahl an Rändelungen ist.

9. Kombination nach einem der Ansprüche 4 bis 8, wobei die Scheibe (22) eine angetriebene Aufzugscheibe (22) ist.

10. Aufzugsystem (20), das Folgendes umfasst:
eine Antriebsvorrichtung (34);
einen Fahrkorb (30);
einen Riemen (28), der zwischen die Antriebsvorrichtung (34) und den Fahrkorb (30) gekoppelt ist; und
eine Kombination aus einer ersten Scheibe (22) und einem Rändelwerkzeug (74) nach einem der Ansprüche 4 bis 9, wobei die Scheibe (22) eine im Wesentlichen zylindrische Fläche (56) beinhaltet, die mit dem Riemen (28) in Rotationskontakt steht, wobei die im Wesentlichen zylindrische Fläche (56) eine Vielzahl an Prägungen (52) beinhaltet, die in Umfangsrichtung ausgerichtet sind, um das Rutschen des Riemens (28) auf der Scheibe (22) zu verhindern.

11. Aufzugsystem (20) nach Anspruch 10, wobei die erste Scheibe (22) eine Antriebsscheibe (22) ist, die mit der Antriebseinrichtung (34) gekoppelt ist;
und/oder
wobei die erste Scheibe (22) eine Fahrkorbscheibe (22) ist, die drehbar an dem Fahrkorb (30) befestigt ist.

12. Aufzugsystem (20) nach Anspruch 11, ferner umfassend:
eine Struktur, die einen Aufzugsschacht (26) definiert, der den Fahrkorb (30) enthält; und
ein Gegengewicht (32), das an dem Riemen (28) aufgehängt ist; wobei insbesondere der Riemen (28) ein erstes Segment (44), das von der ersten Scheibe (22) zum Fahrkorb (30) absteht, und ein zweites Segment (48), das von der ersten Scheibe (22) zum Gegengewicht (32) absteht, beinhaltet.

13. Aufzugsystem (20) nach Anspruch 12, ferner umfassend:
einen ersten Abschluss (46), der mit der Struktur in Eingriff steht; und
eine zweite Scheibe (40), die drehbar an dem Fahrkorb (30) befestigt ist, wobei das erste Segment (44) über die zweite Scheibe (40) geführt wird und sich zwischen der ersten Scheibe (22) und dem ersten Abschluss (46) erstreckt.

14. Aufzugsystem (20) nach Anspruch 13, ferner umfassend:
einen zweiten Abschluss (50), der mit der Struktur in Eingriff steht; und
eine dritte Scheibe (42), die drehbar an dem Gegengewicht (32) befestigt ist, wobei das zweite Segment (48) über die dritte Scheibe (42) geführt wird und sich zwischen der ersten Scheibe (22) und dem zweiten Abschluss (50) erstreckt.

15. Aufzugsystem (20) nach einem der Ansprüche 10 bis 14, wobei die Vielzahl an Prägungen (52) so konstruiert und angeordnet ist, dass sie Reibung zwischen dem Riemen (28) und der im Wesentlichen zylindrischen Fläche (56) erzeugt.

## Revendications

1. Procédé d'impression d'une poulie à courroie (22) sans retrait d'une courroie (28) associée, le procédé comprenant :
le placement d'une roue de moletage d'un outil (74) contre une section s'étendant circonférentiellement d'une poulie (22) n'étant pas en contact avec la courroie (28) ; et
la rotation de la poulie (22).

2. Procédé selon la revendication 1, comprenant en outre :
la sollicitation de la roue de moletage contre la poulie (22) ;
dans lequel, en particulier, la roue de moletage est sollicitée contre la poulie (22) par l'intermédiaire d'une vis de vérin de l'outil (74).

3. Procédé selon la revendication 2, comprenant en outre :
l'actionnement d'une vis de vérin de l'outil (74) pour solliciter la roue de moletage contre la poulie (22).

4. Combinaison d'une poulie (22) construite et agencée pour tourner autour d'un axe pour guider le mouvement d'une courroie (28) et d'un outil (74) de moletage de poulie configuré pour imprimer la poulie (22) sans retirer la courroie (28), la poulie (22) comprenant :
une surface (56) circonférentiellement continue orientée de manière sensiblement radiale vers l'extérieur, et comprenant une pluralité d'impressions (52) orientées pour empêcher la courroie (28) de glisser sur la poulie (22),
**caractérisée en ce qu'**un outil (74) de moletage comprend une roue de moletage configurée pour être placée contre une section s'étendant circonférentiellement de la poulie (22) qui n'est pas en contact avec la courroie (28) pour produire des impressions (52) en faisant tourner la poulie (22).

5. Combinaison selon la revendication 4, dans laquelle chacune de la pluralité d'impressions (52) est espacée circonférentiellement d'une impression adjacente de la pluralité d'impressions (52).

6. Combinaison selon les revendications 4 et 5, dans laquelle la surface (56) circonférentiellement continue est sensiblement cylindrique.

7. Combinaison selon l'une quelconque des revendications 4 à 6, dans laquelle la surface (56) circonférentiellement continue comprend une partie cylindrique sensiblement lisse (60) et une partie imprimée (52, 56) qui est circonférentiellement continue,
dans laquelle, en particulier, chaque impression (52) de la pluralité d'impressions (52) comprend un élément disposé radialement vers l'extérieur depuis la partie cylindrique sensiblement lisse (60) ;
dans laquelle, en particulier, chaque impression (52) de la pluralité d'impressions (52) comprend une vallée définie par la partie imprimée et disposée radialement vers l'intérieur depuis la partie cylindrique sensiblement lisse (60).

8. Combinaison selon l'une quelconque des revendications 4 à 7, dans laquelle la pluralité d'impressions (52) est une pluralité de molettes.

9. Combinaison selon l'une quelconque des revendications 4 à 8, dans laquelle la poulie (22) est une poulie d'ascenseur entraînée (22).

10. Système d'ascenseur (20), comprenant :
une unité d'entraînement (34) ;
une cabine (30) ;
une courroie (28) couplée entre l'unité d'entraînement (34) et la cabine (30) ; et
une combinaison d'une première poulie (22) et d'un outil (74) de moletage selon l'une quelconque des revendications 4 à 9, ladite poulie (22) comprenant une surface (56) sensiblement cylindrique en contact rotatif avec la courroie (28), la surface (56) sensiblement cylindrique comprenant une pluralité d'impressions (52) réparties circonférentiellement pour empêcher la courroie (28) de glisser sur la première poulie (22) .

11. Système d'ascenseur (20) selon la revendication 10, dans lequel la première poulie (22) est une poulie entraînée (22) couplée à l'unité d'entraînement (34) ;
et/ou
dans lequel la première poulie (22) est une poulie de cabine (22) montée de manière rotative sur la cabine (30).

12. Système d'ascenseur (20) selon la revendication 11, comprenant en outre :
une structure définissant un puits de levage (26) contenant la cabine (30) ; et
un contrepoids (32) suspendu par la courroie (28) ;
dans lequel, en particulier, la courroie (28) comprend un premier segment (44) faisant saillie depuis la première poulie (22) à la cabine (30), et un second segment (48) faisant saillie depuis la première poulie (22) au contrepoids (32).

13. Système d'ascenseur (20) selon la revendication 12, comprenant en outre :
une première terminaison (46) en prise avec la structure ; et
une deuxième poulie (40) montée pour tourner vers la cabine (30), dans lequel le premier segment (44) est acheminé autour de la deuxième poulie (40) et s'étend entre la première poulie (22) et la première terminaison (46).

14. Système d'ascenseur (20) selon la revendication 13, comprenant en outre :
une seconde terminaison (50) en prise avec la structure ; et
une troisième poulie (42) montée pour une rotation vers le contrepoids (32), dans lequel le second segment (48) est acheminé autour de la troisième poulie (42) et s'étend entre la première poulie (22) et la seconde terminaison (50).

15. Système d'ascenseur (20) selon l'une quelconque des revendications 10 à 14, dans lequel la pluralité d'impressions (52) est construite et agencée pour produire un frottement entre la courroie (28) et la surface (56) sensiblement cylindrique.
